# EUROPEAN PATENT APPLICATION

(11) **EP 4 796 730 A1**
(43) Date of publication of application: **26.08.2026**
(21) Application number: 24774270.3
(22) Date of filing: 22.03.2024
(51) Int. Cl.: E04H 4/16

(54) **POOL CLEANING MACHINE AND WALL-CLIMBING METHOD THEREOF**

(30) Priority: 23.03.2023 CN 202310292242
(71) Applicant: Thunder Host Limited, Hong Kong (HK)
(72) Inventor: HUI, Martin Wing-Kin, Hong Kong (CN)
(74) Representative: Ipconsult
(86) International application number: PCT/CN2024/083419
(87) International publication number: WO 2024/193707

(57) **Abstract**

A pool cleaning machine and a wall-climbing method thereof. The wall-climbing method of the pool cleaning machine comprises: maintaining a certain distance between a front wheel of a pool cleaning machine and a target pool wall; making a driving device drive a rear wheel to travel, wherein under the action of an inertia force, a machine body backwards by a preset angle around the axis of the rear wheel, and a front part of the machine body is lifted; and then making the pool cleaning machine move forwards, so that the front wheel comes into contact with the surface of the target pool wall. In the method, under the action of the inertia force, the machine body tilts backwards by a preset angle around the axis of the rear wheel, and the front part of the machine body is lifted and leaves the surface of a pool bottom. The front wheel does not come into contact with the surface of the pool bottom and is also kept separated from the target pool wall, such that jamming can be avoided; and the rear wheel does not come into contact with the target pool wall and only comes into contact with the pool bottom, such that jamming is also avoided. The rear wheel is then made to continue to travel, so that the front wheel comes into contact with the surface of the target pool wall at a certain height, and then smoothly crosses a right-angle or corner position, and thus the pool cleaning machine can climb smoothly.

## Description

This application claims priority to Chinese patent application Ser. No. 202310292242.1, filed Mar. 23, 2023, entitled "Wall Climbing Method for Pool Cleaning Machine", the entire contents of which are incorporated herein by reference.

### TECHNICAL FIELD

The present application relates to a pool cleaning device, in particular to a pool cleaning machine capable of moving on a surface to be cleaned of a pool and further relates to a wall climbing method.

### BACKGROUND OF THE INVENTION

Currently, a pool cleaning machine can be applied to clean the pool bottom and pool wall of a pool (swimming pool or other pool).

The pool cleaner generally includes a body and a driving wheel mounted on the body. The driving wheel is rotatably mounted on the front portion and the rear portion of the body, and generally includes front wheels and rear wheels, so that the pool cleaning machine can move on a predetermined surface. The body forms a main body of the pool cleaning machine, and the machine body is provided with a water inlet and a water outlet. By means of an appropriate pumping mechanism, an appropriate amount of water in the pool may be forced into the machine body through the water inlet and then discharged through the water outlet to form a cleaning water flow. A filtering device is usually provided between the water inlet and the water outlet, so as to filter the water when the cleaning water flows through the body, thereby realizing the cleaning of the water in the pool.

The pool cleaning machine not only needs to move on the surface of the pool bottom but also needs to move on the surface of the vertical pool wall. In this case, a part of the cleaning water flow can be discharged from the top of the machine body and perpendicular to the surface of the pool wall, so that the pool cleaning machine moves against the surface of the pool wall by using the recoil force of the part of the water flow.

During the cleaning of the pool, the pool cleaning machine inevitably moves between different surfaces, such as moving from a horizontal pool bottom surface to a vertical pool wall surface (wall climbing motion). In practice, when the wall climbing motion is performed, the pool cleaning opportunity is very difficult to climb, thereby affecting the cleaning efficiency. Although the driving force can be increased, the wall climbing motion can be realized by multiple collisions, but it is easy to cause the cleaning machine to be out of control, and at the same time, power is wasted and noise is generated.

### SUMMARY OF THE INVENTION

### TECHNICAL PROBLEMS

How to make the pool cleaning machine smoothly perform wall climbing movements is a technical problem to be solved by those skilled in the art.

### TECHNICAL SOLUTION

In view of the above technical problems, the present application provides a wall climbing method for a pool cleaning machine. By using the method, the pool cleaning machine can climb from the bottom surface of the pool to the surface of the pool wall more smoothly, and the above deficiencies are avoided.

Further provided is a pool cleaning machine, which can implement the wall climbing method.

In the wall climbing method for a pool cleaning machine provided by the present application, the pool cleaning machine includes a body, a front wheel mounted on the body, a rear wheel, and a driving device;

The wall climbing method comprises:
maintaining the front wheel and the target pool wall a predetermined distance, that is, when the front wheel and the target pool wall have a predetermined distance, stopping the pool cleaning machine;
causing the driving device to drive the rear wheel to move and enabling the machine body to tilt backwards around the axis of the rear wheel by a predetermined angle under the action of the inertial force thereby raising the front portion of the machine body; and then moving the pool cleaning machine to make the front wheel contact the surface of the target pool wall.

In the method, inertia law is used, and when the front wheel and the target pool wall maintain a predetermined distance, the machine body is stationary; The driving device drives the rear wheel to move (preferably the direction of the driving force is horizontally or obliquely downward), so that the rear wheel has a forward acceleration, and since the mass of the machine body is relatively large, there is an inertia that remains stationary, and a backward inertial force is generated relative to the rear wheel, so that the body tilt a predetermined angle backwards around the axis of the rear wheel under the action of the inertial force, and the front portion of the machine body is raised and leaves the bottom surface of the pool. Since the front wheel is not in contact with the bottom surface of the pool, and also remains separated from the target pool wall, jamming can be avoided; and the rear wheel is not in contact with the target pool wall, is only in contact with the bottom of the pool and will not be stuck. Then, the rear wheels continue to move, so that the front wheels contact the surface of the target pool wall at a certain height; thereafter, the front wheels are only in contact with the target pool wall V, so that the front wheels and the rear wheels roll smoothly, and then smoothly cross the right angle or the corner position, so that the pool cleaning machine can smoothly climb.

In addition, in the pool, the buoyancy of the water also causes the lifting state of the body to maintain a certain time, so that the front wheel contacts the surface of the target pool wall at a certain height.

In a further technical solution, the machine body is provided with a balance shooting water port with at least a part of components directly above;

Before the driving device is driven to move the rear wheel, the method further includes: stopping the balance shooting port from spraying water outwards. When the balance shooting port sprays water outwards, the recoil force generated by the balance shooting port acts on the machine body in a downward direction, so that the machine body remains balanced; and when the balance shooting water port stops spraying water, the buoyancy generated by the water in the pool acts on the machine body, which is beneficial to the front part of the machine body to be lifted, thereby facilitating the smooth movement of the wall climbing movement.

In a further technical solution, the front wheel and the target pool wall are kept at a predetermined distance, specifically: after the pool cleaning machine is in contact with the target pool wall, the pool cleaning machine is retracted, so that the front wheel and the target pool wall have a predetermined distance. In this way, the wall climbing motion can be started when the pool cleaning machine is not in contact with the target pool wall, thereby facilitating operation of the pool cleaning machine.

In a further technical solution, the driving device is caused to drive the rear wheel to move, specifically, the rear wheel is driven to rotate by the mechanical transmission mechanism to move. In this way, the rear wheel can have a relatively large acceleration, so that the backward inertial force of the body relative to the rear wheel is large, so that the front portion of the machine body is easier to lift.

Corresponding to the above method, the present application further provides a pool cleaning machine, comprising a machine body, a front wheel, a rear wheel, and a driving device mounted on the machine body; In addition, a wall climbing control device is further included; the wall climbing control device comprises a position sensor and a controller; an access end of the controller is connected to the position sensor signal, and an output end of the controller is connected to an electric control end signal of the driving device; the position sensor is configured to detect a distance between the pool cleaning machine and a target pool wall, and generate a position signal; The controller determines the distance between the pool cleaning machine and the target pool wall according to the position signal, and sends a wall climbing driving signal to the driving device when it is determined that the distance between the front wheel and the target pool wall is a predetermined value; the driving device drives the rear wheel to move according to the wall climbing driving signal, and causes the body to tilt the predetermined angle backwards around the axis of the rear wheel under the action of the inertial force, and the front part of the body is raised; and then the pool cleaning machine is moved forward, so that the front wheel contacts the surface of the target pool wall. The pool cleaning machine may implement the wall climbing method, which makes the pool cleaning machine more smoothly pass through the corner position of the pool wall.

In a preferred technical solution, the machine body is provided with a balance shooting water port with at least some components directly above, and the balance water pump is configured corresponding to the balance shooting water port; An output end of the controller is connected to a control end signal of the balance water pump; when it is determined that the distance between the front wheel and the target pool wall is a predetermined value, the controller first sends a water-injection shutdown signal to the balance water pump, and then sends a wall-climbing drive signal to the drive device; and the balance water pump stops pumping water according to the water-injection shutdown signal. In the same principle, the pump water is stopped, so that the balance shooting water port stops spraying water outwards, so that the front part of the machine body can be more easily lifted.

In a preferred technical solution, the wall climbing control device further comprises a touch signal generator mounted at the front part of the body, and the touch signal generator is configured to generate a touch signal when the body touches the pool wall; an input end of the controller is connected to the touch signal generator signal, and sends a backward driving signal to the driving device according to the touch signal; and the driving device drives the pool cleaning machine to retreat according to the backward driving signal.

In an optional technical solution, the position sensor detects the distance between the pool cleaning machine and the target pool wall through an acoustic wave or an extended measuring rod.

In a preferred technical solution, the front wheel is made of an elastic material, or the periphery of the front wheel is provided with an outwardly extending elastic piece. In this way, when the pool cleaning machine moves on the surface of the bottom of the pool and performs a cleaning operation, the front wheel absorbs a certain energy due to the recoil force of the balance shooting water port to generate elastic deformation. When the pool cleaning machine performs right-angle climbing, the front wheel release capability of the elastic material is released, and the shape is restored, so that the pool cleaning machine can be raised more quickly, thereby helping to avoid the driving wheel close to the right angle of the pool away from the bottom surface of the pool, thereby facilitating the pool cleaning machine to more smoothly perform right-angle climbing.

### BENEFICIAL EFFECTS OF THE INVENTION

According to the method provided in this application, an inertia law is used, and when the front wheel and the target pool wall maintain a predetermined distance, the machine body is stationary; The driving device drives the rear wheel to move (preferably the direction of the driving force is horizontally or obliquely downward), so that the rear wheel has a forward acceleration, and since the mass of the machine body is relatively large, there is an inertia that remains stationary, and a backward inertial force is generated relative to the rear wheel, so that the body tilts a predetermined angle backwards around the axis of the rear wheel under the action of the inertial force, and the front portion of the machine body is raised and leaves the bottom surface of the pool. Since the front wheel is not in contact with the bottom surface of the pool, and also remains separated from the target pool wall, jamming can be avoided; and the rear wheel is not in contact with the target pool wall, is only in contact with the bottom of the pool, and will not be stuck. Then, the rear wheels continue to move, so that the front wheels contact the surface of the target pool wall at a certain height; thereafter, the front wheels are only in contact with the target pool wall V, so that the front wheels and the rear wheels roll smoothly, and then smoothly cross the right angle or the corner position, so that the pool cleaning machine can smoothly climb.

### BRIEF DESCRIPTION OF THE DRAWINGS

The present application may be further described more conveniently with reference to the accompanying drawings describing specific structures of specific embodiments of the present application, wherein all of them are replaced with corresponding parts. It should be noted that other arrangements of the present application are possible, and therefore, the particularity of the drawings should not be understood as being able to replace the general description of the present application.
FIG. 1 is a schematic diagram of the principle of jamming of the teeth on the bottom surface of the pool and the teeth on the surface of the pool wall when the pool cleaning machine climbing wall moves.
FIG. 2 is a schematic diagram of friction force of a traveling wheel of a pool cleaning machine.
FIG. 3 is a schematic diagram of a motion principle of a front wheel and a rear wheel during a wall climbing movement of a pool cleaning machine.
FIG. 4 is a schematic diagram of a wall climbing principle of a pool cleaning machine provided by the present application.
FIG. 5 is a state in which the machine body tilts a corresponding angle backwards around the axis of the rear wheel under the action of an inertial force.
FIG. 6 is a schematic diagram of a logical structure of a wall climbing control device of a pool cleaning machine.

### Embodiments of the Present Invention

In view of the above problems existing in the prior art, the applicant of the present patent application has conducted in-depth research and analysis on the wall climbing movement of the pool cleaning machine.

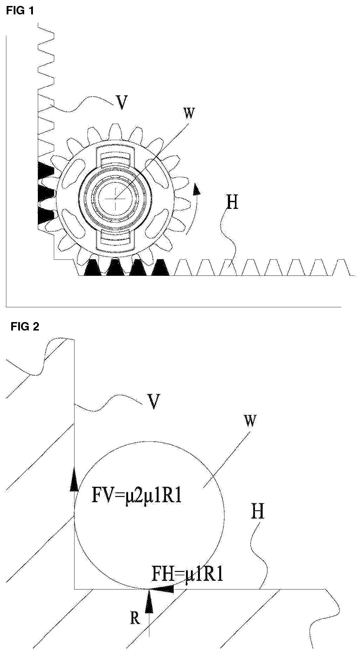

Referring to FIG. 1, when the pool cleaning machine climbing wall moves, the teeth of the bottom surface of the pool and the teeth on the surface of the pool wall will jam the driving wheel. The meshing principle of the figure shows the principle of friction fit between the traveling wheel W of the pool cleaning machine and the surface H of the pool bottom and the surface V of the vertical pool wall. As can be seen from FIG. 1, at right angles, the teeth of the driving wheel W remain engaged with the H teeth and pool wall surface V teeth of the bottom surface of the pool. As shown in the figure, if the traveling wheel W needs to climb along the surface V of the pool wall, it is necessary to rotate in the counterclockwise direction, but the teeth of the traveling wheel W engage with the teeth of the bottom surface H of the pool, so that the traveling wheel W cannot rotate, so that the traveling wheel W cannot climb along the surface V of the pool wall, and then the traveling wheel W is stuck at a right angle. The applicant believes that this is one of the important reasons for the difficulty of wall climbing of the pool cleaning machine.

Of course, in practical applications, the driving wheel W and the pool bottom surface H and the pool wall surface V are not meshed with the rigid gear, but in a friction fit manner (which may be regarded as meshing of the flexible teeth), the driving wheel W remains in contact with the pool bottom surface H and the pool wall surface V. Under the action of the driving force, the traveling wheel W can overcome the friction force of the corresponding surface (for example, deformation of the flexible teeth on the corresponding surface to generate a slipping phenomenon), continue to rotate, but cannot move or climb.

Then, that contact surface of the pool bottom surface H and the pool wall surface V will slip

FIG. 2 is a schematic diagram of the friction force of the driving wheel. In the case of considering only the gravity of the driving wheel W and the driving force, the acting force FH = µ1 * R₁ in the horizontal direction between the traveling wheel W and the surface H of the bottom of the pool, where µ1 is the friction coefficient between the traveling wheel and the surface H of the pool, and R₁ is the interaction force between the traveling wheel W and the surface H of the bottom of the pool in the vertical direction. It can be determined that the force in the horizontal direction between the traveling wheel W and the surface V of the pool wall is FV. The force FV = µ2 * FH = µ2 * µ1 * R₁ between the traveling wheel W and the surface V of the pool wall, where µ2 is the coefficient of friction between the traveling wheel W and the surface V of the pool wall. In real life, most of the materials, in particular soaked in water, have a friction coefficient of µ1 or µ2 lower than 1.0 (e.g. 0.6 or 0.7); Therefore, µ1 * R₁ > µ2 * µ1 * R₁, and then it can be determined that FV is less than FH, that is, in the bottom surface H of the pool and the surface V of the pool wall, and the surface V of the pool wall is a slip plane. Therefore, in an actual scenario, regardless of how the driving force increases, the traveling wheel W will only slip in place of the included angle and cannot climb up along the surface V of the pool wall in the actual scenario. The applicant believes that this is another important cause that the pool cleaning machine climbing wall is difficult to move.

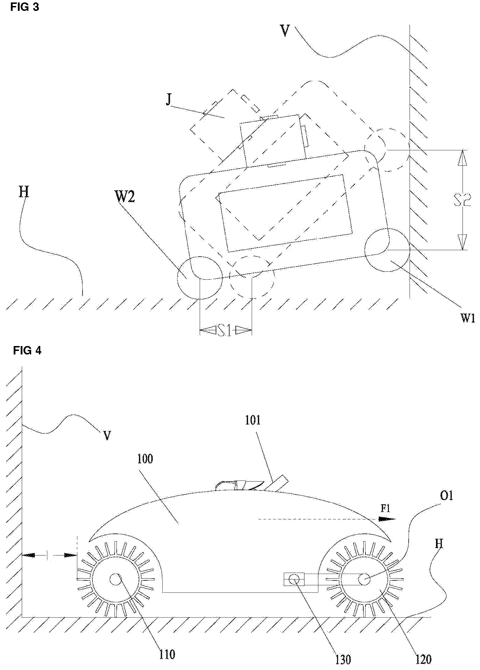

Referring to FIG. 3, FIG. 3 is a schematic diagram of a motion principle of a front wheel and a rear wheel of a pool cleaning machine during wall climbing movement.

The pool cleaning machine includes a body J, a front wheel W1 mounted at a front end of the body J, and a rear wheel W2 shown at a rear end of the body J In FIG. 3, the solid line schematically shows that the pool cleaning machine is in a first position (a position where the front wheel W1 is just in contact with the vertical pool wall V), and the pool cleaning machine shown in phantom is in a second position (the pool cleaning machine further climbing, and the front wheel W1 further moves upward along the vertical pool wall V). As can be seen from the figure, the movement distance of the rear wheel W2 on the surface H of the pool is S1, the movement distance of the front wheel W1 in the vertical pool wall V is S2, it can be seen from the figure that the movement distance S2 of the front wheel W1 is greater than the movement distance S1 of the rear wheel W2, that is, the rolling distance of the front wheel W1 at the same time is greater than the rolling distance of the rear wheel W2, and according to the relationship between the distance S, the angular velocity W, the wheel radius r and the time t (S = W * 2π * r * t): Therefore, the rotation speed (angular velocity) of the front wheel W1 is different from the rotation speed (angular velocity) of the rear wheel W2, that is, in this time phase, the rotation speeds of the front wheel W1 and the rear wheel W2 are different. Further, in the case of synchronous rotation of the front wheel W1 and the rear wheel W2, in this time period, the difference in the movement distance forces the body J to have a trend of "elongation", and since the body J is rigid, the front wheel W1 and the rear wheel W2 have at least one slipping (invalid rotation), which in turn causes the pool cleaning machine to tilt and be out of control, and is stuck when the climbing wall moves. The applicant believes that this is a significant reason why the pool cleaning machine climbing wall is difficult to move.

Based on the above analysis, for reasons of difficulty in wall climbing movement, the applicant provides the following embodiments to solve the problem of wall climbing movement; of course, it is possible to solve the transfer situation of right angle, non-right angle (such as ramp and inclination angle climbing).

FIG. 4 is a schematic diagram of a working principle of a pool cleaning machine according to this application. The pool cleaning machine includes a front wheel 110 and a rear wheel 120 mounted on the machine body 100. The pool cleaning machine includes two front wheels and two rear wheels. Both the front wheel and the rear wheel may be mounted on the machine body 100 in an existing and rotatable manner. The two front wheels and the two rear wheels provide a foundation for the moving of the pool cleaning machine while supporting the machine body 100. It should be noted that, in the pool cleaning machine, "front" and "rear" are merely convenient for description and are relative and do not have a specific meaning. In the wall climbing motion description, "front" is a direction close to the vertical pool wall V, and "rear" is a direction away from the vertical pool wall V. Of course, the front wheel 110 and the rear wheel 120 may also be drum-like structures.

The body 100 of the pool cleaning machine is provided with a water inlet and an appropriate water outlet; by means of an appropriate pumping mechanism, an appropriate amount of water in the pool can be forced into the machine body through the water inlet and then discharged through the water outlet to form a cleaning water flow. The filtering device may be provided between the water inlet and the water outlet, so as to achieve filtering when the cleaning water flows through the body, thereby realizing the cleaning of the water pool.

When the water is discharged from the water outlet, the generated recoil force may drive the pool cleaning machine to move the pool cleaning machine in a predetermined direction or trajectory. Therefore, the driving device may include a drainage port and a cooperating pumping mechanism. Of course, a special driving device can also be provided to drive the pool cleaning machine to move in a predetermined direction or trajectory, so as to clean the predetermined position of the pool. Therefore, the pool cleaning machine may include a driving device formed by an appropriate drainage port and a cooperating pumping mechanism, or may include a driving device formed by a motor and a mechanical transmission mechanism. In this embodiment, FIG. 4 illustrates a driving device 130 including a mechanical mechanism

The wall climbing method of the pool cleaning machine is specifically as follows:

First, the front wheel 110 of the pool cleaner is kept at a predetermined distance L (i.e. the distance between the front most front wheel 110 and the pool wall) and L is a value greater than zero, with the vertical pool wall V (for convenience of description, subsequently referred to as the target pool wall). The front portion or the front wheel 110 of the pool cleaning machine is prevented from being in contact with the target pool wall V, and a space is provided for the machine body 100 to tilt the predetermined angle backwards.

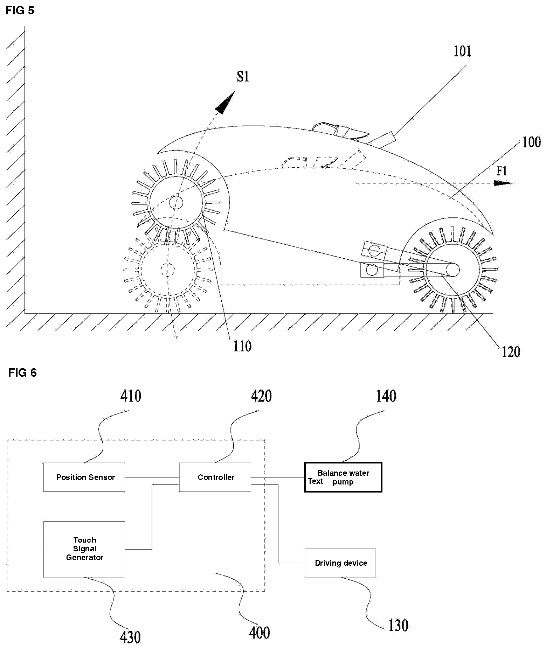

Secondly, the driving device 130 is caused to drive the rear wheel 120 to move, preferably the direction of the driving force is horizontally or obliquely downwards, so that the machine body 100 is tilted back around the axis of the rear wheel 120 by a predetermined angle under the action of the inertial force F1, and the front part of the machine body 100 is raised; and then the pool cleaning machine is moved forward, so that the front wheel 110 contacts the surface of the target pool wall V. As shown in FIG. 5, FIG. 5 illustrates a state in which the machine body 100 tilts the corresponding angle backwards around the axis of the rear wheel 120 under the action of the inertial force F1.

The method takes advantage of the law of inertia, when the front wheel 110 maintains a predetermined distance L from the target pool wall V, the machine body 100 is stationary; the driving device 130 drives the rear wheel 120 to move, so that the rear wheel 120 has a forward acceleration, and since the mass of the machine body 100 is large, there is an inertia that remains stationary, and a backward inertial force F1 is generated relative to the rear wheel 120, so as to form a tilting torque S1, so that the machine body 100 tilts a predetermined angle backwards around the axis of the rear wheel 120 under the action of the inertial force F1, and the front portion of the machine body 100 is raised and leaves the bottom surface of the pool. Since the front wheel 110 is not in contact with the bottom surface H of the pool and also remains separated from the target pool wall V, jamming can be avoided; the rear wheel 120 is not in contact with the target pool wall V, is only in contact with the bottom of the pool, and will not be stuck. Then, the rear wheel continues to move, so that the front wheel 110 contacts the surface of the target pool wall V at a certain height, and thereafter, the front wheel 110 only contacts the target pool wall V, so that the front wheel 110 and the rear wheel 120 roll smoothly, and then smoothly cross the right angle or the corner position, so that the pool cleaning machine can smoothly climb.

In addition, by raising the front wheel 110 while avoiding the adverse impact of the rotation of the front wheel 110 and the rear wheel 120 out of synchronization on the drive mechanism. It can be understood that in the pool, the buoyancy of the water also causes the front body 100 to remain in a tilted position at a certain time, so that the front wheel 110 contacts the surface of the target pool wall V at a certain height.

In order to make the machine body 100 tilts backwards around the axis of the rear wheel 120 under the action of the inertial force, the driving force can be directly applied to the rear wheel 120, such as by driving the rear wheel 120 by the mechanical transmission mechanism to rotate. In this way, the rear wheel 120 can have a large acceleration, so that the machine body 100 is relatively large with respect to the rear wheel 120, and the forward portion of the machine body 100 is easier to lift. The extension line of the driving force is preferably passed through the axis of the rear wheel 120 if the driving device is formed with the water drainage port and the cooperating pumping mechanism.

In an embodiment, the distance L may be a determined value or may be a predetermined range.

In a further technical solution, in the case that the machine body 100 is provided with a balance shooting water port 101 having at least some components directly above, in the wall climbing method, before driving the driving device 130 to drive the rear wheel 120, the method further comprises: causing the balance shooting water port 101 to stop spraying water outwards. When the balance shooting water port 101 sprays water outwards, the recoil force generated by the balance shooting water port 101 acts on the machine body 100 in the downward direction, so that the machine body 100 remains balanced; when the balance shooting water port 101 stops spraying water, the buoyancy generated by the water in the pool acts on the machine body 100, which is beneficial to the front part of the machine body 100 to be lifted, thereby facilitating smooth wall climbing movement. Of course, in the preferred solution, after the balance shooting water port 101 stops spraying water outwards, the balance shooting water port 101 is delayed for 1-3 seconds, and then the driving device 130 drives the rear wheel 120 to move.

In order to keep the front wheel 110 a predetermined distance from the target pool wall V, the specific manner may be that after the pool cleaning machine is in contact with the target pool wall V, the pool cleaning machine is moved back a predetermined distance, so that a predetermined distance L is provided between the front wheel 110 and the target pool wall V.

Corresponding to the above method, the present application further provides a pool cleaning machine, which comprises, in addition to a machine body 100, a front wheel 110, a rear wheel 120, and a driving device 130 mounted on the machine body 100; the pool cleaning machine further comprises a wall climbing control device 400 for facilitating operation, and the wall climbing control device 400 may have a corresponding independence relative to other control components of the pool cleaning machine, for example, having a separate power connection line to control power on and power off.

FIG. 6 is a logical schematic diagram of the wall climbing control device. The wall climbing control device 400 may comprise a position sensor 410 and a controller 420; an access end of the controller 420 is in signal connection with the position sensor 410, and an output end of the controller 420 is connected to an electric control end signal of the driving device 130; the position sensor 410 is configured to detect a distance between the pool cleaning machine and a target pool wall, and generate a position signal; the controller 420 determines the distance between the pool cleaning machine and the target pool wall V according to the position signal, and sends a wall climbing driving signal to the driving device 130 when it is determined that the distance between the front wheel 110 of the pool cleaning machine and the target pool wall V is a predetermined value L. The driving device 130 drives, according to the wall-climbing driving signal, the rear wheel 120 to move (preferably, the direction of the driving force thereof is horizontally or obliquely downwards), and enables the machine body 100 to tilt a predetermined angle backwards around the axis of the rear wheel 120 under the action of an inertial force, and the front portion of the machine body 100 is raised; and then the pool cleaning machine is moved forward, so that the front wheel 110 contacts the surface of the target pool wall V. The pool cleaning machine may implement the wall climbing method, which makes the pool cleaning machine more smoothly pass through the corner position of the pool wall.

Corresponding to the wall climbing method, at least some components of the balance shooting water port 101 are provided on the machine body 100, and the balance water pump 140 can be configured corresponding to the balance shooting water port 101; and the output end of the controller 420 can be connected to the control end signal of the balance water pump 140. When it is determined that the distance between the front wheel 110 and the target pool wall V is a predetermined value L, the controller 420 first sends a water shutdown signal to the balancing water pump 140 and then sends a wall climbing driving signal to the driving device 130; the balancing water pump 140 stops pumping water according to the water shutdown signal. In the same principle, the pump water is stopped, so that the balance shooting water port 101 stops spraying water outwards, so that the front portion of the machine body 100 can be more easily lifted. The pool cleaner may comprise a plurality of water pumps, but the controller 420 may control a balanced water pump corresponding to the balance shooting water port 101.

In a preferred technical solution, the wall climbing control device 400 further comprises a touch signal generator 430 mounted at a front portion of the machine body 100, and the touch signal generator 430 is configured to generate a touch signal when the body 100 touches the pool wall; an input end of the controller 420 is connected to the touch signal generator 430, and sends a backward driving signal to the driving device 130 according to the touch signal; and the driving device 130 drives the pool cleaning machine to retreat according to the backward driving signal. In addition, the touch signal may serve as an electrical start signal on the wall climbing control device 400, that is, when the touch signal generator 430 does not touch the pool wall, the wall climbing control device 400 is not powered on and is in a sleep state. When the touch signal generator 430 touches the pool wall and generates a touch signal, the wall climbing control device 400 is powered on based on the touch signal, and changes from the sleep state to the working state.

It can be understood that the position sensor detects the distance between the pool cleaning machine and the target pool wall through an acoustic wave or an extended measuring rod.

In an embodiment of the present application, the front wheel 110 is made of an elastic material, or the periphery of the front wheel is provided with an outwardly extending elastic piece. In this way, when the pool cleaning machine move on the surface of the pool bottom and performs a cleaning operation, the front wheel absorbs a certain energy due to the recoil force of the balance shooting water port 101 to generate elastic deformation. When the pool cleaning machine performs right-angle climbing, the front wheel release capability of the elastic material is released, and the shape is restored, so that the pool cleaning machine can be raised more quickly, thereby helping to avoid the driving wheel close to the right angle of the pool away from the bottom surface of the pool, thereby facilitating the pool cleaning machine to more smoothly perform right-angle climbing.

It can be understood that the principle of the pool cleaning machine is described by taking the wall climbing motion as an example, and the corresponding effect can also be generated when a non-right angle (such as a ramp and a tilt angle climbing) is performed.

Although the preferred embodiments of the present application have been described in the above description, those skilled in the relevant art can understand that many changes or modifications can be made in the details of design, construction or operation without departing from the scope of the present application.

## Claims

1. A wall climbing method for a pool cleaning machine, the pool cleaning machine comprising a machine body (100), a front wheel (110), a rear wheel (120) and a driving device (130) mounted on the machine body (100); the wall climbing method comprises: keeping the front wheel (110) a predetermined distance (L) from the target pool wall (V); causing the driving device (130) to drive the rear wheel (120) to move, and enabling the machine body (100) to turn around the axis of the rear wheel (120) backward by a predetermined angle under the action of the inertial force, wherein the front portion of the machine body (100) is raised; and then the pool cleaning machine is moved forward, so that the front wheel (110) contacts the surface of the target pool wall (V).

2. The wall climbing method of the pool cleaning machine according to claim 1, wherein the machine body (100) is provided with a balance shooting water port (101) with at least some components directly above; before the driving device (130) is driven to move the rear wheel (120), the method further comprises: causing the balance shooting water port (101) to stop spraying water outwards.

3. The wall climbing method of the pool cleaning machine according to claim 1, wherein the front wheel (110) and the target pool wall (V) are kept at a predetermined distance, specifically: after the pool cleaning machine is in contact with the target pool wall (V), the pool cleaning machine is retracted, so that the front wheel (110) and the target pool wall (V) have a predetermined distance (L).

4. The wall climbing method of the pool cleaning machine according to claim 1, wherein the driving device (130) is caused to drive the rear wheel (120) to move, specifically, the rear wheel (120) is driven to rotate by the mechanical transmission mechanism to move.

5. A pool cleaning machine, comprising a machine body (100), a front wheel (110), a rear wheel (120) and a driving device (130) mounted on the machine body (100), wherein the pool cleaning machine further comprises a wall climbing control device (400); the wall climbing control device (400) comprises a position sensor (410) and a controller (420); an access end of the controller (420) is in signal connection with the position sensor (410), and an output end of the controller (420) is connected to an electric control end signal of the driving device (130); the position sensor (410) is configured to detect a distance between the pool cleaning machine and a target pool wall (V) and generate a position signal; the controller (420) determines the distance between the pool cleaning machine and the target pool wall (V) according to the position signal, and sends a wall climbing driving signal to the driving device (130) when it is determined that the distance between the front wheel (110) and the target pool wall (V) is a predetermined value (L); the driving device (130) drives the rear wheel (120) to move according to the wall-climbing driving signal, and enables the machine body (100) to tilt a predetermined angle backwards around the axis of the rear wheel (120) under the action of an inertial force, and the front portion of the machine body (100) is raised; and then the pool cleaning machine is moved forward, so that the front wheel (110) contacts the surface of the target pool wall (V).

6. The pool cleaning machine according to claim 5, wherein the machine body (100) is provided with a balance shooting water port (101) with at least a part of components directly above, and a balance water pump (140) is configured corresponding to the balance shooting water port (101); an output end of the controller (420) is connected to a control end signal of the balance water pump (140); when the controller (420) determines that the distance between the front wheel (110) and the target pool wall (V) is a predetermined value (L), the controller (420) first sends a water-transmitting shutdown signal to the balancing water pump (140), and then sends the wall-climbing driving signal to the driving device (130); the balance water pump (140) stops pumping water according to the water-injection shutdown signal.

7. The pool cleaning machine according to claim 6, wherein the wall climbing control device (400) further comprises a touch signal generator (430) mounted at a front portion of the machine body (100), and the touch signal generator is configured to generate a touch signal when the body (100) touches the pool wall; an input end of the controller (420) is in signal connection with the touch signal generator (430), and sends a backward driving signal to the driving device (130) according to a touch signal; the driving device (130) drives the pool cleaning machine to retreat according to the backward driving signal.

8. The pool cleaning machine according to any one of claims 5 to 7, wherein the position sensor detects the distance between the pool cleaning machine and the target pool wall (V) through an acoustic wave or an extended measuring rod.

9. The pool cleaning machine according to any one of claims 5 to 7, wherein the front wheel (110) is made of an elastic material.

10. The pool cleaning machine according to claim 9, wherein a periphery of the front wheel (110) is provided with an outwardly extending elastic piece.
